# FASCICULE DE BREVET EUROPEEN

(11) **EP 3 004 600 B1**
(45) Date de publication et mention de la délivrance du brevet: **22.03.2017**
(21) Numéro de dépôt: 14733249.8
(22) Date de dépôt: 04.06.2014
(51) Int. Cl.: F02C 7/32, F16H 1/22

(54) **BOÎTIER D'ENTRAÎNEMENT DES ACCESSOIRES POUR UNE TURBOMACHINE**
HILFSANTRIEBSGEHÄUSE FÜR EINE TURBOMASCHINE
ACCESSORY DRIVE CASE FOR A TURBINE ENGINE

(30) Priorité: 06.06.2013 FR 1355240; 06.06.2013 FR 1355241
(43) Date de publication de la demande: 13.04.2016
(73) Titulaire: Snecma, 75015 Paris (FR)
(72) Inventeur: ARMANGE, Frantz, 77550 Moissy-Cramayel Cedex (FR)
(74) Mandataire: Regimbeau
(86) Numéro de dépôt international: PCT/FR2014/051321
(87) Numéro de publication internationale: WO 2014/195632

(56) Documents cités:
- EP-A2- 2 455 597
- CA-A1- 2 516 700
- FR-A1- 2 290 576
- GB-A- 2 169 968
- US-A- 1 832 111
- US-A- 5 687 561

## Description

### DOMAINE DE L'INVENTION

La présente invention concerne le domaine des turbomachines, et plus particulièrement les turbopropulseurs, et notamment les turbopropulseurs de faible puissance comprenant un boitier d'entrainement de l'hélice non coaxial. Elle vise en particulier le montage d'équipements auxiliaires et la transmission mécanique entre un arbre du moteur, dans un turbopropulseur, et ces équipements à l'aide d'un boîtier d'entraînement des accessoires, ou AGB (pour Accessory Gearbox, en anglais).

### ARRIERE-PLAN TECHNOLOGIQUE

Le boîtier d'entraînement des accessoires, bien connue de l'homme du métier sous sa dénomination anglaise "Accessory Gear Box" (AGB), supporte différents équipements auxiliaires, ou accessoires, montés sur le moteur et nécessaires à son fonctionnement ou à celui de l'aéronef. Ces divers accessoires peuvent notamment comprendre un générateur, un démarreur, un alternateur, des pompes hydrauliques à carburant ou à huile, et sont entraînés mécaniquement par l'arbre du moteur par l'intermédiaire d'arbres de transmission. La puissance nécessaire à l'entraînement des accessoires est généralement prélevée mécaniquement au niveau du compresseur de la turbomachine.

Habituellement, l'AGB comprend des engrenages à axes parallèles afin d'entrainer mécaniquement les accessoires. L'écartement des accessoires est donc déterminé par les entraxes des engrenages, et non par leur encombrement respectif. Pour augmenter cet écartement, il est donc nécessaire d'ajouter un ou plusieurs pignons intermédiaires, ce qui présente l'inconvénient d'augmenter à la fois l'encombrement de l'AGB et sa masse. Par ailleurs, les axes de tous les engrenages de l'AGB étant parallèles, les accessoires présentent nécessairement la même orientation par rapport à l'AGB et au moteur.

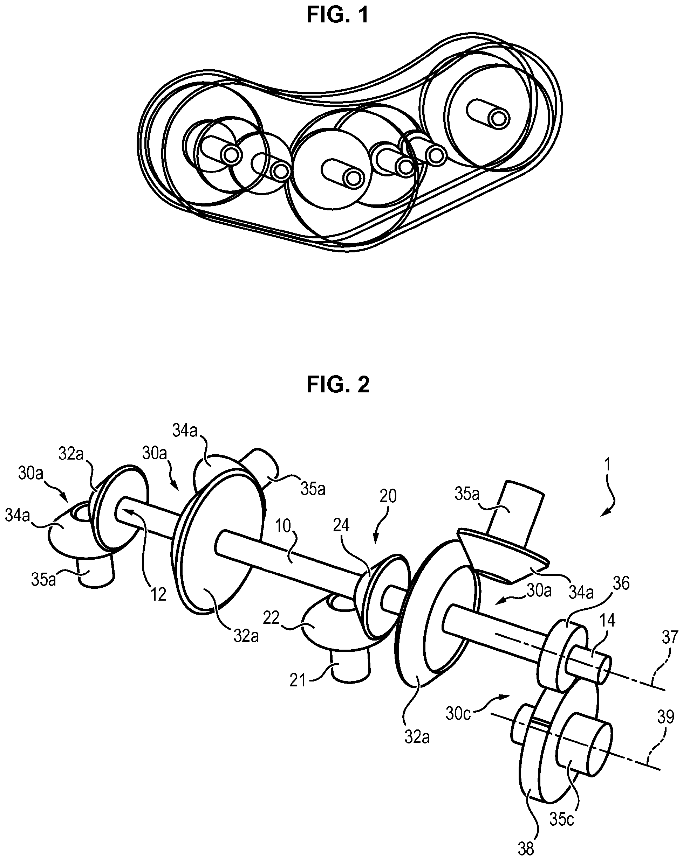

Par ailleurs, dans le cas d'un turboréacteur (ou « turbofan » en anglais), le générateur de gaz est connecté à une soufflante qui est logée dans un carter de soufflante. La nacelle présente alors une section globalement circulaire. L'espace disponible pour loger l'AGB se défini par conséquent en une partie annulaire logée dans la nacelle, autour de la turbomachine, et présente par conséquent une forme globalement courbe (voir figure 1).

En comparaison, dans le cas d'un turbopropulseur, le générateur de gaz met une hélice en rotation par l'intermédiaire d'un boitier d'entraînement de l'hélice. L'hélice n'est pas logée dans un carter, et la nacelle présente une section globalement rectangulaire. L'espace disponible pour loger l'AGB est donc différent de celui des turboréacteurs, et s'étend principalement au-dessus et en dessous du turbomoteur, avec un faible espace sur les flancs latéraux.

Les AGB conventionnels des turboréacteurs ne sont donc pas adaptés d'un point de vue structurel, dimensionnel et fonctionnel, aux turbopropulseurs, notamment de faible puissance comprenant un boitier d'entrainement de l'hélice non coaxial. Par ailleurs, la Demanderesse s'est aperçue que les AGB conventionnels ne permettent pas de répartir les accessoires sur un relativement grand secteur angulaire de la périphérie d'une nacelle de turbopropulseur, et en particulier ne permettent pas d'installer les accessoires à la fois sur le dessus du carter du turbopropulseur et le long d'au moins un de ses flancs.

Par exemple, le document US 5 687 561 décrit un moteur d'un turboréacteur comprenant un boîtier d'entraînement des accessoires d'un moteur comprenant un arbre moteur, adapté pour entrainer mécaniquement au moins deux accessoires comprenant chacun un arbre de transmission. Il n'est cependant pas précisé la configuration ni le mode d'entrainement des accessoires.

Le document EP 2 455 597 quant à lui décrit un moteur comprenant un boîtier d'entraînement des accessoires avec des engrenages à axes parallèles, comprenant un arbre moteur, adapté pour entrainer mécaniquement au moins deux accessoires comprenant chacun un arbre de transmission.

Le document US 1 832 111 décrit un boîtier d'entrainement comprenant un arbre d'entrainement principal et des renvois d'angle. Ce boîtier n'est cependant pas adapté pour être utilisé dans un turbopropulseur.

Le document CA 2 516 700 A décrit une turbomachine selon le préambule de la revendication 1.

### RESUME DE L'INVENTION

Un objectif de l'invention est donc de proposer un boîtier d'entraînement des accessoires pouvant être utilisé dans un turbopropulseur, qui soit en outre modulable et permette d'assouplir l'installation des différents accessoires en s'affranchissant de leur encombrement, sans modifier pour autant leur vitesse d'entrainement, qui présente en outre un poids modéré et qui permette de répartir les accessoires sur une plus grande périphérie du turbopropulseur en tenant compte de la forme particulière de la nacelle du turbopropulseur.

Pour cela, l'invention propose une turbomachine comprenant :
- un carter de moteur,
- un arbre moteur, logé dans le carter de moteur, ledit arbre moteur définissant un axe de rotation,
- un boîtier d'entraînement d'accessoires, disposé à l'extérieur du carter de moteur, le boîtier d'entraînement d'accessoires étant relié à l'arbre moteur par l'intermédiaire d'un arbre radial de transmission entraîné par l'arbre moteur formant un angle avec l'axe de rotation de l'arbre moteur, et
- une pluralité d'arbres de transmission destinés à entrainer mécaniquement des accessoires,
le turbopropulseur étant caractérisé en ce que le boîtier d'entraînement d'accessoires comprend en outre :
- un arbre primaire, s'étendant sensiblement transversalement à l'axe de rotation de l'arbre moteur et entraîné par l'arbre radial de transmission par l'intermédiaire d'un renvoi d'angle primaire, ledit renvoi d'angle primaire comprenant un organe d'engrènement primaire monté sur l'arbre primaire, et
- une pluralité d'ensembles d'entrainement mécanique des arbres de transmission, lesdits ensembles d'entrainement étant entrainés par l'arbre primaire et étant configurés de sorte que les accessoires associés (3) s'étendent en partie supérieure et sur au moins un des bords latéraux du carter de moteur.

Certaines caractéristiques préférées mais non limitatives de la turbomachine décrit ci-dessus sont les suivantes :
- au moins l'un des ensembles d'entrainement comprend un organe d'engrènement secondaire solidaire de l'arbre primaire et un organe d'engrènement de sortie solidaire de l'arbre de transmission de l'accessoire entrainé par l'ensemble d'entrainement,
- l'organe d'engrènement secondaire comprend une roue conique, et l'organe d'engrènement de sortie comprend un pignon conique de sorte qu'un axe de l'arbre primaire et un axe de l'arbre de transmission sont concourants,
- le renvoi d'angle primaire comprend un organe d'engrènement d'attaque solidaire de l'arbre radial de transmission,
- les organes d'engrènement du renvoi d'angle primaire sont à axes concourants, l'organe d'engrènement d'attaque comprenant un pignon conique d'attaque, et l'organe d'engrènement primaire comprenant une couronne conique,
- les organes d'engrènement du renvoi d'angle primaire et/ou d'au moins l'un des ensembles d'entrainement sont à axes non concourants,
- le renvoi d'angle primaire comprend une roue et une vis sans fin,
- au moins l'un des ensembles d'entrainement comprend un renvoi d'angle comprenant deux organes d'engrènement comportant une roue et une vis sans fin,
- le boîtier d'entraînement d'accessoires comprend un carter de boîtier et les organes d'engrènement de l'au moins un ensemble d'entrainement sont fixés sur le carter de boîtier par au moins deux liaisons s'étendant de part et d'autre de chaque organe d'engrènement,
- au moins l'un des ensembles d'entrainement comprend un engrenage à axes parallèles comprenant une roue secondaire entrainée par l'arbre primaire et une roue de sortie solidaire de l'arbre de transmission, de sorte que l'axe de la roue secondaire et l'axe de la roue de sortie sont parallèles,
- au moins deux des ensembles d'entrainement sont entrainés en série par un même organe d'engrènement fixé sur l'arbre primaire, ledit organe d'engrènement comprenant une roue secondaire fixée sur l'arbre primaire, et
- au moins l'un des ensembles d'entrainement comprend une roue de sorti entrainée via une roue intermédiaire par une roue secondaire fixée sur l'arbre primaire.

Selon un deuxième aspect, l'invention propose également un aéronef, comprenant une nacelle et une turbomachine comme décrit ci-dessus logé dans la nacelle, dans lequel la nacelle est de forme globalement allongée selon une direction verticale et le turbopropulseur est disposé dans une zone globalement inférieure de la nacelle tandis que le boîtier d'entraînement d'accessoires s'étend dans une zone globalement supérieure de ladite nacelle.

Certains aspects préférés mais non limitatifs de l'aéronef décrit ci-dessus sont les suivants :
- le boîtier d'entraînement d'accessoires comprend une pluralité d'accessoires répartis dans la zone supérieure de la nacelle et sur au moins un des bords latéraux du carter de moteur, et
- le boîtier d'entraînement d'accessoires comprend un premier accessoire disposé au niveau d'une première extrémité libre de l'arbre primaire et agencé de manière à s'étendre vers le bas en étant disposé le long d'un premier bord latéral du carter de moteur.

### BREVE DESCRIPTION DES DESSINS

D'autres caractéristiques, buts et avantages de la présente invention apparaîtront mieux à la lecture de la description détaillée qui va suivre, et au regard des dessins annexés donnés à titre d'exemples non limitatifs et sur lesquels :
La figure 1 illustre un exemple de boîtier d'entraînement des accessoires conventionnel pouvant être utilisé dans un turboréacteur,
La figure 2 est une vue tridimensionnelle d'un premier exemple de réalisation d'un boîtier d'entraînement des accessoires conforme à l'invention, sur laquelle le carter a été omis, et pouvant être utilisé dans une turbomachine du type turbopropulseur,
La figure 3 est un schéma tridimensionnel illustrant les éléments intérieurs du boîtier d'entraînement des accessoires de la figure 2 logés dans un carter de boitier d'entrainement et connecté d'une part à des exemples d'accessoires et d'autre part à un carter de turbomachine,
La figure 4 est une vue tridimensionnelle d'un deuxième exemple de réalisation d'un boîtier d'entraînement des accessoires conforme à l'invention, sur laquelle le carter a été omis, et pouvant être utilisé dans une turbomachine du type turbopropulseur,
La figure 5 est un schéma tridimensionnel illustrant les éléments intérieurs du boîtier d'entraînement des accessoires de la figure 2 logés dans un carter de boitier d'entrainement et connecté d'une part à des exemples d'accessoires et d'autre part à un carter de turbomachine,
Les figures 6a et 6b illustrent des exemples de réalisation de renvois d'angles, et
La figure 7 est une vue du dessus schématique d'un troisième exemple de réalisation d'un boîtier d'entraînement des accessoires conforme à l'invention pouvant être utilisé dans une turbomachine du type turbopropulseur.

### DESCRIPTION DETAILLEE D'UN MODE DE REALISATION

L'invention va être décrite tout particulièrement en référence à un turbopropulseur 8 connecté à une hélice, et un boîtier d'entraînement des accessoires 1 adapté pour entrainer mécaniquement quatre équipements auxiliaires, ou accessoires 3, nécessaires au fonctionnement du moteur 8 ou à celui d'un aéronef. Ceci n'est cependant pas limitatif, dans la mesure où le boîtier d'entraînement des accessoires 1 pourrait être utilisé dans toute autre turbomachine devant supporter et entraîner des accessoires, et que le nombre d'accessoires décrits dans ce qui suit peut être différent selon les besoins de la turbomachine.

Un turbopropulseur 8 comporte typiquement une nacelle qui forme une ouverture pour l'admission d'un flux déterminé d'air vers le moteur 8 proprement dit. Généralement, le turbopropulseur 8 comprend une ou plusieurs sections de compression de l'air admis dans le moteur 8. L'air ainsi comprimé est admis dans une chambre de combustion et mélangé avec du carburant avant d'y être brûlé. Les gaz d'échappement chauds issus de cette combustion sont ensuite détendus dans différents étages de turbine. La turbine entraine alors un boitier d'entraînement de l'hélice qui fournit la puissance de rotation à l'hélice.

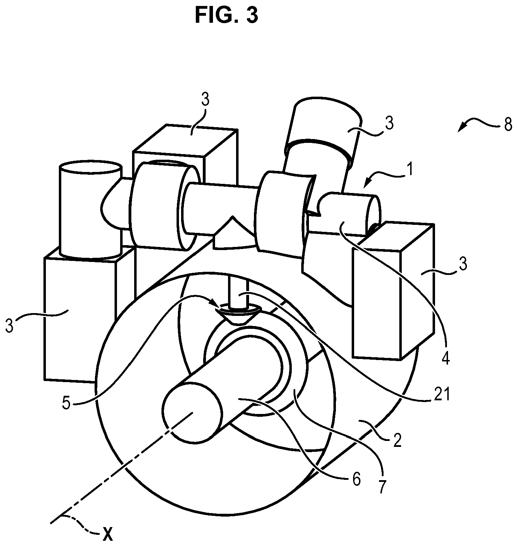

Le boîtier d'entraînement des accessoires 1, ou AGB 1, quant à lui peut être fixé sur un carter 2 du moteur, par exemple au niveau du compresseur, et entraine mécaniquement au moins deux accessoires 3, par exemple quatre accessoires 3 comme représenté sur la figure 3 ou un plus grand nombre encore, en prélevant la puissance d'entrainement nécessaire sur un arbre moteur 6, généralement l'arbre du compresseur.

A cet effet, l'arbre moteur 6 est logé dans le carter de moteur 2 et définit un axe de rotation X. Par ailleurs, les accessoires 3 comprennent chacun un arbre de transmission 35a-35c destiné à entrainer mécaniquement l'accessoire 3 correspondant.

L'AGB quant à lui est disposé à l'extérieur du carter de moteur 2 et est relié à l'arbre moteur 6 par l'intermédiaire d'un arbre radial de transmission 21, entraîné par l'arbre moteur 6. Ici, l'arbre radial 21 de transmission forme un angle avec l'axe de rotation X de l'arbre moteur 6.

L'AGB comprend en outre un arbre primaire 10 et une pluralité d'ensembles d'entrainement 30a-30c mécanique des arbres de transmission 35a-35c.

L'arbre primaire 10 s'étend sensiblement transversalement à l'axe de rotation X de l'arbre moteur 6 et est entraîné par l'arbre radial de transmission 21 par l'intermédiaire d'un renvoi d'angle primaire 20.

Les ensembles d'entrainement 30a-30c mécanique des arbres de transmission 35a-35c quant à eux sont entrainés directement ou indirectement par l'arbre primaire 10 et sont configurés de sorte que les accessoires associés 3 s'étendent de préférence en partie supérieure et sur au moins un flanc du carter de moteur 2.

Grâce à cette configuration, et notamment à la direction transversale de l'arbre primaire 10, l'AGB permet de répartir les accessoires sur un plus grand secteur angulaire de la périphérie du turbopropulseur 8, en tenant compte de ses dimensions et de sa géométrie, en comparaison avec un AGB conventionnel tel que celui représenté sur la figure 1. En particulier, il est à présent possible de répartir les accessoires 3 dans la partie supérieure et sur au moins l'un des flancs du carter 2 du turbopropulseur 8. Par ailleurs, l'utilisation d'un renvoi d'angle et d'un arbre primaire 10 permet d'adapter la vitesse de rotation des arbres de transmission 35a-35c, par l'intermédiaire de leurs ensembles d'entrainement 30a-30c mécanique.

Ici, on entendra par partie supérieure du carter 2 du moteur la partie du carter 2 en liaison avec l'AGB 1, et par flancs latéraux les côtés du carter 2 s'étendant de part et d'autre de la partie supérieure du carter 2.

Le renvoi d'angle primaire 20, comprend un organe d'engrènement d'attaque 22, 26 entrainé par l'arbre moteur 6, et un organe d'engrènement primaire 24, 28 fixé sur l'arbre primaire 10.

Le renvoi d'angle primaire 20 s'étend de préférence de manière centrale par rapport à l'arbre primaire 10, afin que l'arbre primaire 10 soit globalement centré sur le carter 2. L'angle formé entre les axes des organes d'engrènement 22, 24 du renvoi d'angle primaire 20 (dans le plan comprenant l'axe de rotation X du moteur 8 et le centre du renvoi d'angle primaire 20) est alors de préférence de 90°.

Les organes d'engrènement 22, 24, 26, 28 du renvoi d'angle primaire 20 sont par ailleurs choisis de sorte que leurs axes respectifs ne soient pas parallèles. Les axes des organes d'engrènement peuvent ainsi être concourants 23, 25 ou non concourants 27, 29.

L'organe d'engrènement d'attaque 22, 26 est fixé solidairement à un arbre radial de transmission 21 qui est entraîné par un pignon 5 entrainé par l'arbre du moteur 6 à l'aide d'une couronne 7. Ainsi, la rotation de l'arbre moteur 6 entraine la rotation de l'organe d'engrènement d'attaque 22, 26 du renvoi d'angle primaire 20. Ici, l'arbre radial de transmission 21 s'étend selon une direction radiale par rapport à l'axe de rotation X du moteur. En variante, il pourrait également former un angle différent de 90° avec l'axe de rotation X du moteur.

Par exemple, l'organe d'engrènement d'attaque peut comprendre un pignon conique d'attaque 22, c'est-à-dire une roue dont la surface dentée est définie par une génératrice passant par un point fixe (voir figure 2).

L'organe d'engrènement primaire quant à lui peut alors comprendre une couronne 24 conique. Ici encore, la couronne 24 conique comprend une roue dont la surface dentée est définie par une génératrice passant par un point fixe.

Dans le renvoi d'angle primaire 20, la surface conique du pignon d'attaque 22 est en contact avec la surface conique de la couronne 24. Par ailleurs, les dents du pignon d'attaque 22 et de la couronne 24 sont de mêmes type (dents droites, dents hélicoïdales, chevrons, etc.) et de même module (c'est-à-dire le rapport du diamètre sur le nombre de dents), et les centres de la génératrice de leur surface dentée respective sont confondus en un point, afin que le pignon d'attaque 22 puisse entrainer la couronne 24 en rotation.

Le nombre de dents et le rayon du pignon d'attaque 22 et de la couronne 24 sont choisis en fonction du rapport d'engrenage désiré pour le renvoi d'angle primaire 20. Ce rapport d'engrenage correspond au rapport entre la vitesse de rotation de l'arbre de transmission radial 21 et la vitesse de rotation de l'arbre primaire 10 (qui est égal au rapport entre le rayon de la couronne 24 conique sur le rayon du pignon d'attaque 22).

Le rapport d'engrenage du renvoi d'angle primaire 20 est compris de préférence entre 0.5 et 2, et peut être proche ou égal à 1.

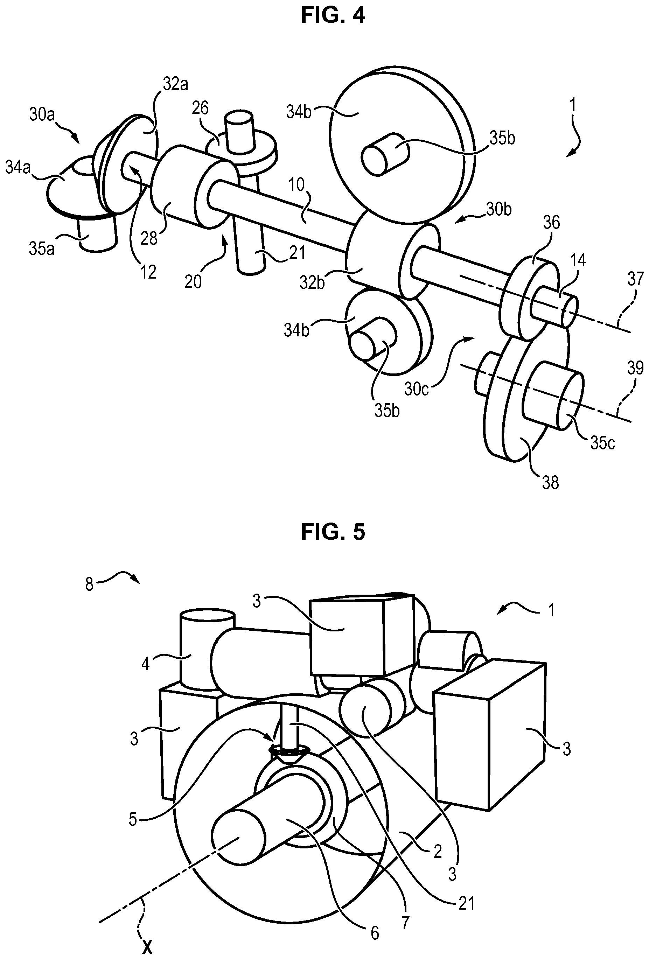

Selon une variante de réalisation, le renvoi d'angle primaire 20 peut comprendre des organes d'engrènement 26, 28 présentant des axes 27, 29 non concourants (voir figure 4).

Ainsi, l'organe d'engrènement d'attaque peut comprendre une roue d'attaque 26, c'est-à-dire une roue dont la surface dentée est de forme globalement cylindrique de révolution. La roue d'attaque 26 est donc fixée solidairement à l'arbre radial de transmission 21, de sorte que la rotation de l'arbre moteur 6 entraine la rotation de la roue d'attaque 26.

L'organe d'engrènement primaire quant à lui peut comprendre une vis sans fin primaire 28 fixée solidairement sur l'arbre primaire 10. Ici encore, sa surface dentée est de forme globalement cylindrique de révolution.

En variante (non illustrée sur les figures), l'organe d'engrènement d'attaque peut comprendre une vis sans fin fixée solidairement sur l'arbre radial de transmission 21, tandis que l'organe d'engrènement primaire comprend une roue fixée solidairement sur l'arbre primaire 10.

Ce mode de réalisation permet de limiter les sollicitations au niveau des organes d'engrènement 26, 28. En effet, les liaisons entre les arbres 10, 21 et le carter 4 de l'AGB 1 comprennent des roulements à bille ou à rouleaux pouvant être disposés de part et d'autre des organes d'engrènement 26, 28 sur l'arbre correspondant, dans la mesure où les axes des organes d'engrènement sont non concourants et peuvent traverser lesdits moyens. Il est ainsi possible de réduire les moments en flexion de la roue d'attaque 26 sur la vis sans fin 28, et donc de gagner en fiabilité, en masse et en encombrement.

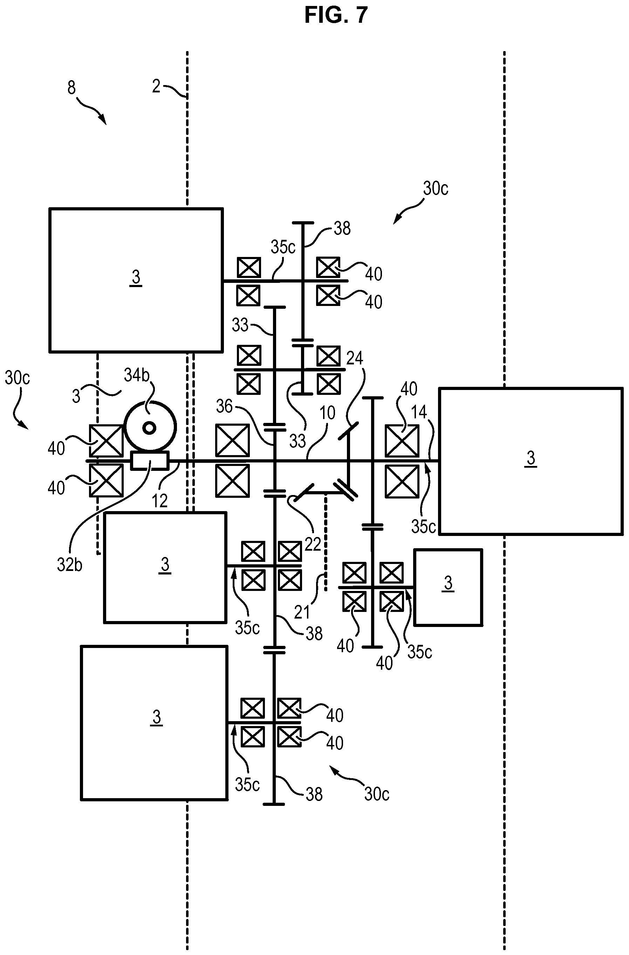

L'AGB 1 comprend en outre autant d'ensembles d'entrainement 30a-30c que d'accessoires 3 à entrainer. En variante, selon la configuration de réalisation de l'ensemble d'entrainement, un même ensemble d'entrainement peut être mis en oeuvre afin d'entrainer, de part et d'autre de l'arbre primaire 10 (voir figure 4) ou en série (voir figure 7), des accessoires différents selon des vitesses de rotation de sens opposé. Comme nous le verrons par la suite, ce dernier mode de réalisation est particulièrement envisageable lorsque l'ensemble d'entrainement comprend un engrenage à axes parallèles (figure 7). Il devient en effet possible d'entrainer, à l'aide d'un même ensemble d'entrainement, deux accessoires 3 connectés en série sur un même engrenage à axes parallèles, permettant ainsi de mieux répartir les accessoires 3 dans la partie supérieure du carter 2, par exemple selon l'axe X du moteur 8.

Un ensemble d'entrainement peut comprendre un renvoi d'angle secondaire 30a-30b comprenant un engrenage à axes concourants ou encore un engrenage à axes non concourants, ou un engrenage à axes parallèles 30c.

Par exemple, l'ensemble d'entrainement peut comprendre un renvoi d'angle secondaire 30a, comprenant un organe d'engrènement secondaire 32a entrainé par l'arbre primaire 10, et un organe d'engrènement de sortie 34a solidaire de l'arbre de transmission 35a de l'accessoire 3.

L'organe d'engrènement secondaire peut notamment comprendre une roue conique 32a, tandis que l'organe d'engrènement de sortie comprend un pignon conique 34a, de sorte que l'axe de l'arbre primaire 10 et l'axe de l'arbre de transmission 35a sont concourants. Un tel exemple d'ensemble d'entrainement 30a est visible sur la figure 2, pour trois des accessoires 3.

Par roue conique 32a et pignon conique 34a, on comprendra ici une roue dont la surface dentée est définie par une génératrice passant par un point fixe.

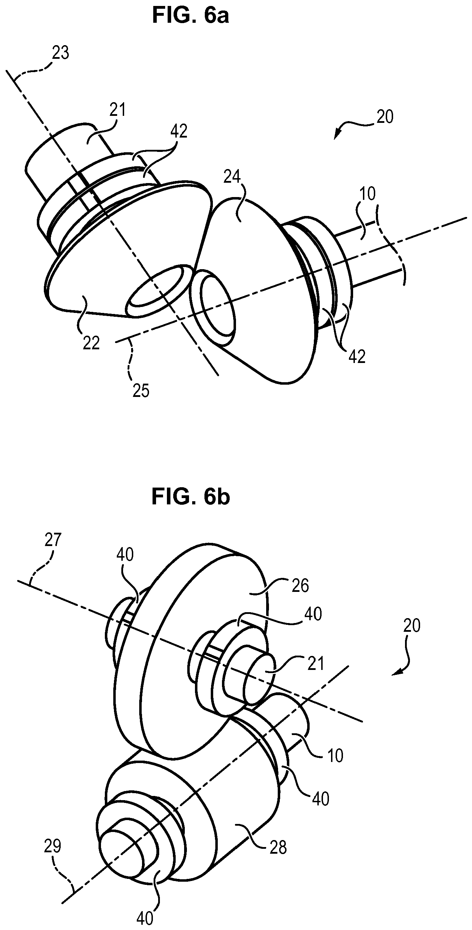

De façon analogue au renvoi d'angle primaire 20, illustré en figure 6a, la surface conique de la roue 32a du renvoi d'angle secondaire est en contact avec la surface conique du pignon 34a correspondant, et leurs dents sont de mêmes type et de même module, et les centres de la génératrice de leur surface dentée respective sont confondus en un point, afin que la roue 32a puisse entrainer le pignon 34a.

Le nombre de dents et le rayon de la roue 32a et du pignon 34a sont en outre choisis en fonction du rapport d'engrenage désiré pour le renvoi d'angle secondaire 30a, qui correspond au rapport entre le rayon de la roue 32a et le rayon du pignon 34a et est compris de préférence entre 0.5 et 2, et peut être proche ou égal à 1.

Par ailleurs, la roue conique 32a peut être connectée à un deuxième pignon conique (non illustré sur les figures), s'étendant de l'autre côté de l'arbre primaire 10 par rapport à l'autre pignon conique 34a. Les deux pignons coniques peuvent présenter des rayons différents (mais de même type et de même module, les centres de la génératrice de leur surface dentée respective étant confondus en un point), selon le rapport d'engrenage désiré pour leur accessoire 3 respectif.

En variante, l'un ou les renvoi(s) d'angle secondaire(s) 30b peuvent comprendre un renvoi d'angle secondaire à axes non concourants. Dans ce cas, l'organe d'engrènement secondaire peut notamment comprendre une roue tandis que l'organe d'engrènement de sortie peut comprendre une vis sans fin, ou inversement, de sorte que l'arbre primaire 10 et l'arbre de transmission 35b présentent des axes non concourants.

Ici encore, et de manière analogue au renvoi d'angle primaire illustré sur la figure 6b, la vis sans fin peut être connectée à une deuxième roue conique, s'étendant de l'autre côté de l'arbre primaire 10 par rapport à l'autre roue (ou inversement). Les deux roues peuvent présenter des rayons différents (mais de même type et de même module, les centres de la génératrice de leur surface dentée respective étant confondus en un point), selon le rapport d'engrenage désiré pour leur accessoire respectif.

Selon une autre variante encore, l'ensemble d'entrainement comprend un engrenage à axes parallèles 30c.

Ainsi, l'organe d'engrènement secondaire 30c peut notamment comprendre une roue secondaire 36 fixée solidairement sur l'arbre primaire 10, tandis que l'organe d'engrènement de sortie comprend une roue de sortie 38 solidaire de l'arbre de transmission 35c de l'accessoire 3, de sorte que les axes 37, 39 des roues secondaire 36 et de sortie 38 soient parallèles.

Un tel exemple d'ensemble d'entrainement 30c est visible sur la figure 2, pour l'accessoire 3. Afin de limiter l'encombrement de l'AGB 1, l'engrenage à axes parallèles 30c peut être disposé dans une zone adjacente à une extrémité libre 12 de l'arbre primaire 10. De la sorte, l'accessoire 3 entrainé par cet ensemble d'entrainement 30c peut s'étendre latéralement par rapport au carter 2 du moteur. Par exemple, dans l'exemple de réalisation des figures 2 et 3, la roue secondaire 36 est disposée à proximité de l'extrémité libre 12 de l'arbre primaire 10, au niveau d'un flanc latéral du carter 2 du moteur, tandis que la roue de sortie 38 s'étend sous ladite roue secondaire 36, en regard du flanc latéral du carter 2 du moteur.

Cette forme de réalisation de l'ensemble d'entrainement permet ainsi, avec un faible encombrement, d'atteindre des rapports d'engrenage importants, et offre la possibilité de placer des accessoires 3 sur au moins l'un des flancs du carter de moteur 2.

Les surfaces des dents des roues 36, 38 sont en contact et leurs dents sont de mêmes type et de même module, et les centres de la génératrice de leur surface dentée respective sont confondus en un point, afin que la roue secondaire 36 puisse entrainer la roue de sortie 38. Par ailleurs, le nombre de dents et le rayon des roues 36, 38 sont choisis en fonction du rapport d'engrenage désiré, qui correspond au rapport entre le rayon de la roue secondaire 36 sur le rayon de la roue de sortie 38 pour l'engrenage à axes parallèles 30c, et est compris de préférence entre 1 et 5, chacun des accessoires ayant une vitesse d'entraînement différente. On notera que les ensembles d'entrainement à axes parallèles 30c permettent d'atteindre des rapports d'engrenage importants, ce qui peut être utile pour certains accessoires comme par exemple des unités de lubrification, pour lesquels la vitesse de rotation de l'arbre correspondant est beaucoup plus faible que la vitesse de rotation de l'arbre moteur 6.

A nouveau, la roue secondaire 36 peut être connectée à une deuxième roue de sortie (non illustrée sur les figures), s'étendant de l'autre côté de l'arbre primaire 10 par rapport à l'autre roue de sortie 38, pouvant présenter un rayon différent (mais de même type et de même module, les centres de la génératrice de leur surface dentée respective étant confondus en un point), selon le rapport d'engrenage désiré.

L'arbre primaire 10, le renvoi d'angle primaire 20 et les ensembles d'entrainement 30a-30c peuvent être fabriqués séparément. Le pignon conique d'attaque 22, 26, les roues coniques 32a et la roue secondaire 36 sont alors rapportés sur l'arbre primaires 10 et fixés en position par rapport audit arbre 10. De plus, la liaison entre le carter 4 de l'AGB et l'arbre primaire 10 est réalisée à l'aide de roulements à billes ou à rouleaux, afin de limiter les frottements induits par cette liaison.

Ainsi, grâce à son arbre primaire 10, son renvoi d'angle primaire 20 et ses ensembles d'entrainement 30a-30c, l'AGB 1 permet d'entrainer une série d'accessoires 3 indépendamment à des vitesses de rotation adaptées en ajustant simplement l'entraxe entre les ensembles d'entrainement 30a-30c et leur rapport d'engrenage respectif. L'AGB permet en outre d'adapter la répartition des accessoires 3 sur une plus grande partie de la périphérie du carter 2, et notamment en partie supérieure et sur au moins un flanc du carter 2.

Ainsi, on a illustré sur les figures 2 et 3 un exemple d'AGB 1 supportant quatre accessoires 3.

Ici, l'arbre primaire 10 s'étend transversalement à l'axe de rotation X du moteur 8. Par ailleurs, le renvoi d'angle primaire 20 comprend un pignon conique d'attaque 22 et une couronne 24 conique.

Le premier accessoire 3 est disposé au niveau d'une première extrémité libre 12 de l'arbre primaire 10, et est entrainé par l'intermédiaire d'un premier ensemble d'entrainement 30a comprenant un premier renvoi d'angle formé d'une roue conique 32a et d'un pignon conique 34a.

Le deuxième accessoire 3 est disposé entre le premier accessoire 3 et le renvoi d'angle primaire 20, et est entrainé par l'intermédiaire d'un deuxième ensemble d'entrainement 30a comprenant un deuxième renvoi d'angle formé d'une roue conique 32a et d'un pignon conique 34a.

Afin que le premier accessoire 3, le deuxième accessoire 3, le renvoi d'angle primaire 20 et le carter 2 du moteur ne se gênent pas mutuellement, malgré leur encombrement respectif,
- le premier renvoi d'angle 30a peut être agencé de manière à s'étendre vers le bas, de sorte que le premier accessoire 3 soit disposé le long d'un flanc latéral du carter 2 du moteur, et
- le deuxième renvoi d'angle 30a peut être agencé de manière à s'étendre globalement parallèlement à l'axe de rotation X du moteur 8, de sorte que le deuxième accessoire 3 soit disposé le long du carter 2 du moteur 8, dans sa partie supérieure.

Le troisième accessoire 3 est disposé quant à lui entre le renvoi d'angle primaire 20 et la deuxième extrémité libre 14 de l'arbre primaire 10, et est entrainé par l'intermédiaire d'un troisième ensemble d'entrainement 30a comprenant un troisième renvoi d'angle formé d'une roue conique 32a et d'un pignon conique 34a.

Le quatrième accessoire 3 est disposé au niveau de la deuxième autre extrémité libre 14 de l'arbre primaire 10, et est entrainé par l'intermédiaire d'un quatrième ensemble d'entrainement 30c comprenant un engrenage à axes parallèles formé de deux roues 36, 38.

Afin que le troisième accessoire 3, le quatrième accessoire 3, le renvoi d'angle primaire 20 et le carter 2 du moteur ne se gênent pas mutuellement, malgré leur encombrement respectif,
- le troisième renvoi d'angle 30a peut être agencé de manière à s'étendre vers le haut (dans la direction opposée au moteur 8), de sorte que le troisième accessoire 3 soit à distance du carter 2 du moteur, et
- l'engrenage à axes parallèles 30c peut être agencé en direction de la partie inférieure du carter 2, de sorte que le quatrième accessoire 3 soit disposé le long de l'autre flanc latéral du carter 2 du moteur.

Les rapports d'engrenage respectifs des quatre ensembles d'entrainement 30a- et 30c et du renvoi d'angle primaire 20 sont en outre choisis en fonction de la vitesse de rotation désirée pour les accessoires 3 correspondants. Ainsi, dans l'exemple des figures 2 et 3, les organes d'engrènement du renvoi d'angle primaire 22, 24 et du premier ensemble d'entrainement 32a, 34a ont des diamètres globalement similaires : le rapport d'engrenage de ces renvois d'angle 20, 30a est donc sensiblement égal à 1. En revanche, les organes d'engrènement secondaires 32a du deuxième et du troisième ensemble d'entrainement 30a ont des diamètres plus grands que leurs organes d'engrènement de sortie respectifs 34a, de sorte que leur rapport d'engrenage est supérieur à 1 (multiplicateur). Enfin, le rayon de l'organe d'engrènement secondaire 36 est plus petit que le rayon de l'organe d'engrènement de sortie 38, de sorte que le rapport d'engrenage du quatrième ensemble d'entrainement 30c est inférieur à 1 (réducteur).

On a illustré sur les figures 4 et 5 un deuxième exemple d'AGB 1 conforme à l'invention supportant quatre accessoires 3.

Sur la figure 4, l'arbre primaire 10 s'étend transversalement à l'axe de rotation X du moteur 8. Par ailleurs, le renvoi d'angle primaire 20 comprend également ici une roue d'attaque 26 et une vis sans fin primaire 28.

Un premier accessoire 3 est disposé au niveau de la première extrémité libre 12 de l'arbre primaire 10, et est entrainé par l'intermédiaire d'un premier ensemble d'entrainement 30a comprenant un renvoi d'angle à axes concourants formé d'une roue conique 32a et d'un pignon conique 34a.

De manière similaire au premier exemple d'AGB 1 illustré en figures 2 et 3, le renvoi d'angle 30a peut être agencé de manière à s'étendre vers le bas, de sorte que le premier accessoire 3 soit disposé le long d'un flanc latéral du carter 2 du moteur et ne gêne pas le renvoi d'angle primaire 20 ni le carter 2 du moteur.

Le deuxième accessoire 3b est disposé entre le renvoi d'angle primaire 20 et la deuxième extrémité libre 14 de l'arbre primaire 10, et est entrainé par l'intermédiaire d'un deuxième ensemble d'entrainement 30b comprenant un renvoi d'angle à axes non concourants formé d'une vis sans fin 32b et d'une roue 34b.

Le troisième accessoire 3 quant à lui est disposé en regard du deuxième accessoire 3, et est entrainé par l'intermédiaire d'un troisième ensemble d'entrainement 30b comprenant un troisième un renvoi d'angle à axes non concourants formé de la vis sans fin 32b du deuxième accessoire 3 et d'une roue supplémentaire 34b.

Ainsi, la même vis sans fin 32b fait partie à la fois de deux ensembles d'entrainement 30b, afin d'entrainer deux roues de sortie 34b différentes et donc deux accessoires 3 différents.

Le quatrième accessoire 3 quant à lui est disposé au niveau de l'autre extrémité libre 12 de l'arbre primaire 10, et est identique au quatrième accessoire de la figure 2. A cet effet, le quatrième accessoire 3 est entrainé par l'intermédiaire d'un ensemble d'entrainement 30c comprenant un engrenage à axes parallèles formé de deux roues 36, 38. Afin qu'il ne gêne pas les deuxième et troisième accessoires 3 ni le carter 2 du moteur, le quatrième accessoire 3 peut être agencé en direction de la partie inférieure du carter 2, le long du flanc du carter 2.

Ainsi, dans ce deuxième exemple d'AGB 1, le renvoi d'angle primaire 10 et les ensembles d'entrainement 30a-30b comprennent un renvoi d'angle à axes non concourants, tandis que le troisième ensemble d'entrainement 30c comprend un engrenage à axes parallèles.

On a par ailleurs illustré en figure 7, un troisième exemple de réalisation d'un propulseur comprenant un AGB 1 conforme à l'invention. Dans cet exemple de réalisation, l'AGB 1 comprend six accessoires 3.

Ici encore, l'arbre primaire 10 s'étend transversalement à l'axe de rotation X du moteur 8. Par ailleurs, le renvoi d'angle primaire 20 comprend un pignon conique d'attaque 22 et une couronne 24 conique. Ceci n'est pas limitatif, dans la mesure où le renvoi d'angle primaire 20 pourrait également comprendre un renvoi d'angle à axes non concourants, comprenant par exemple une vis sans fin et une roue correspondante.

Le premier accessoire 3 est disposé au niveau de la deuxième extrémité libre 14 de l'arbre primaire 10, et est entrainé directement par l'arbre primaire 10. La vitesse de rotation de l'arbre d'entrainement 30a du premier accessoire 3 est donc fixée par le rapport d'engrenage du renvoi d'angle primaire 20 et la vitesse de rotation de l'arbre radial 21.

Le deuxième accessoire 3 est disposé entre le premier accessoire 3 et le renvoi d'angle primaire 20 et est entrainé par l'intermédiaire d'un ensemble d'entrainement 30c à axes parallèles formé d'une roue secondaire 36, fixée solidairement sur l'arbre primaire 10 entre la couronne conique 24 et le premier accessoire 3, et d'une roue de sortie 38 solidaire de l'arbre de transmission 35c du deuxième accessoire 3, de sorte que les axes 37, 39 des roues secondaire 36 et de sortie 38 soient parallèles.

L'utilisation d'un engrenage à axes parallèles 30c permet de placer le deuxième accessoire 3 en amont ou en aval sur le carter 2 par rapport au premier accessoire 3, en décalant le deuxième accessoire 3 suivant l'axe X du moteur 8. Le premier accessoire 3 et le deuxième accessoire 3 s'étendent donc tous les deux en partie supérieure du carter 2.

Les troisième, quatrième et cinquième accessoires 3 sont disposés quant à eux entre le renvoi d'angle primaire 20 et la première extrémité libre 12 de l'arbre primaire 10, et sont entrainés par l'intermédiaire d'un même troisième ensemble d'entrainement 30c à axes parallèles comprenant une roue secondaire 36, fixée solidairement sur l'arbre primaire 10.

Ainsi, le troisième accessoire 3 est entrainé par l'intermédiaire d'une première roue de sortie 38, qui est en contact avec la roue secondaire 36.

Le quatrième accessoire 3 est entrainé par une deuxième roue de sortie 38, qui est entrainée par la roue secondaire 36 par l'intermédiaire de la première roue de sortie 38 du troisième accessoire 3. Le quatrième accessoire 3 est donc connecté en série avec la roue de sortie 38 du troisième accessoire 3 et avec la roue secondaire 36.

Le cinquième accessoire 3 est entrainé par une troisième roue de sortie 38, qui est entrainée par la roue secondaire 36 par l'intermédiaire de deux roues intermédiaires 33. Le cinquième accessoire 3 est donc connecté en série avec les roues intermédiaires 33 et avec la roue secondaire 36. La mise en oeuvre de ces deux roues intermédiaires 33 permet en effet d'ajuster le rapport d'engrenage entre la troisième roue secondaire 36, qui est entrainée directement par l'arbre primaire 10, et la roue de sortie 38 qui entraine l'arbre de transmission 35c du cinquième accessoire 3, pour obtenir un rapport de réduction important de l'engrenage tout en optimisant la position du cinquième accessoire 3 par rapport au carter 2.

Les troisième et quatrième accessoires 3, qui s'étendent en série, peuvent ainsi être positionnés dans la partie supérieure du carter 2 d'un même côté amont ou aval du carter 2 par rapport à l'arbre primaire 10 transverse, , tandis que le cinquième accessoire 3 peut être placé à distance de l'arbre primaire 10 grâce aux différentes roues 36, 33, 38 en série, également dans la partie supérieure du carter 2, à l'opposé des troisième et quatrième accessoires par rapport à l'arbre primaire 10 .

Enfin, le sixième accessoire 3 est disposé au niveau de la première extrémité libre 12 de l'arbre primaire 10, et est entrainé par l'intermédiaire d'un ensemble d'entrainement 30b comprenant un renvoi d'angle à axes non concourants formé d'une vis sans fin 32b, fixée solidairement sur l'arbre primaire 10, et une roue de sortie 34b solidaire de l'arbre de transmission de l'accessoire 3. Cet agencement permet ainsi de placer le sixième accessoire 3 le long d'un flanc du carter 2. Si l'arbre de transmission de ce sixième accessoire 3 est disposé de façon à s'étendre sensiblement verticalement, c'est-à-dire globalement dans la direction de l'arbre radial 21, l'accessoire 3 peut être disposé relativement bas par rapport au carter 2. Une telle disposition peut être avantageuse, en particulier quand l'accessoire 3 consiste en une unité de lubrification. En variante, il est possible de remplacer le renvoi d'angle à axes non concourants 30b, formé par la vis sans fin 32b et la roue de sortie 34b, par un renvoi d'angle à axes concourants 30a, par exemple à pignons coniques. Il peut en effet être recherché un meilleur rendement de la transmission de puissance même si cela se fait au détriment de la compacité de l'engrenage, en comparaison avec une vis sans fin qui permet une certaine compacité mais n'offre généralement pas un très bon rendement.

Les rapports d'engrenage respectifs des six ensembles d'entrainement 30b, 30c et du renvoi d'angle primaire 20 sont en outre choisis en fonction de la vitesse de rotation désirée pour les accessoires 3 correspondants.

Ainsi, dans l'exemple des figures 2 et 3, les organes d'engrènement du renvoi d'angle primaire 22, 24 et du premier ensemble d'entrainement 32a, 34a ont des diamètres globalement similaires : le rapport d'engrenage de ces renvois d'angle 20, 30a est donc sensiblement égal à 1. En revanche, les organes d'engrènement secondaires 32a des deuxième et troisième ensembles d'entrainement 30b ont des diamètres plus grands que leurs organes d'engrènement de sortie respectifs 34b, de sorte que leur rapport d'engrenage est supérieur à 1 (multiplicateur). Enfin, le rayon de l'organe d'engrènement secondaire 36 est plus petit que le rayon de l'organe d'engrènement de sortie 38, de sorte que le rapport d'engrenage du quatrième ensemble d'entrainement 30c est inférieur à 1 (réducteur).

En comparaison, dans l'exemple de la figure 7, les organes d'engrènement 36, 38 de l'ensemble d'entrainement du troisième et du quatrième accessoire 3 ont des diamètres similaires et sont entrainés par une même roue secondaire 36, tandis que les organes d'engrènement 36, 38 de l'ensemble d'entrainement 36, 38 des deuxième 3, cinquième 3 et sixième 3 accessoires présentent un diamètre différent et donc des rapports d'engrenage différents.

On notera que la mise en oeuvre d'organes d'engrènement à axes non concourants 32, 34, 36, 38 (qu'il s'agisse du renvoi d'angle primaire 20 ou des renvois d'angles secondaires 30b-30c) permet aux arbres associés (arbre de transmission radial 21, arbre primaire 10, et arbres de transmission 35b-35c) de traverser de part en part les organes d'engrènement formant lesdits renvois. Il est donc possible de ne pas fixer les organes d'engrènement sur l'extrémité libre des arbres 35b, 35c.

Ainsi, la fixation d'organes d'engrènement à axes non concourants au carter 4 de l'AGB 1 peut être réalisée en deux points non adjacents, de part et d'autre de chaque organe d'engrènement, plutôt qu'en un point unique en bout d'arbre 35b, 35c. En imposant deux points d'appui de part et d'autre des organes d'engrènement 32, 34, 36, 38, il est ainsi possible de réduire les moments en flexion au niveau des organes d'engrènement associés 32, 34, 36, 38, et donc de gagner en fiabilité, en encombrement et en masse pour l'AGB 1 (voir notamment figure 6b ou figure 7 par exemple).

Les organes d'engrènement 32, 34, 36, 38 de l'AGB peuvent à présent être fixés au carter 4 de l'AGB 1 au niveau de chaque arbre 35, 35c en deux points non adjacents à l'aide de liaisons adaptées, par exemple des roulements à billes ou à rouleaux 40. On notera que la mise en oeuvre de roulement à billes ou à rouleaux 40 permet en outre limiter les frottements entre le carter 4 de l'AGB 1 et les arbres des renvois d'angle à axes non concourants.

Les roulements 40 comprennent alors une bague interne, fixée sur l'arbre, et une bague externe, fixée sur le carter 4 de l'AGB 1, la bague interne et la bague externe étant mobiles en rotation l'une par rapport à l'autre autour de l'arbre 35, 35c grâce à des billes ou des rouleaux 40 (selon le type de roulement) s'étendant entre les deux.

Par exemple, dans le cas de la roue d'attaque 22 et de la vis sans fin primaire 24 illustrés en figure 6b, leurs axes 23, 25 non concourants permettent la mise en oeuvre de deux paires de liaisons 40 du type roulement à billes ou à rouleaux. Chaque liaison 40 comprend deux roulements, s'étendant de part et d'autre de l'un des organes d'engrènement 22 (resp.24). De la sorte, l'arbre radial de transmission 21 (resp. l'arbre primaire 10) peut être fixé au carter de l'AGB 1 en deux points non confondus (et séparés d'au moins la longueur de la roue 22), lesdits points de fixation correspondant aux deux roulements 40 s'étendant de part et d'autre de la roue d'attaque 22 (respectivement la vis sans fin primaire 24). Il en est de même dans le cas des organes d'engrènement à axes parallèles (voir notamment en figure 7).

A titre de comparaison, dans le cas d'un renvoi d'angle primaire à axes concourants tel qu'un couplage conique (voir figure 6a), l'arbre primaire 10 ne pourrait être prolongé au-delà du pignon conique de sorte que les deux roulements 42 devaient être positionnés du même côté (figure 6a). Il n'y aurait donc qu'une unique liaison (et donc un seul point d'appui) entre les arbres et le carter 4 de l'AGB 1, qui solliciterait par conséquent deux fois plus les liaisons que dans le cas de liaisons réparties de chaque côté des organes d'engrènement. Par ailleurs, la fixation des arbres au carter 4 au niveau des liaisons crée un bras de levier au niveau de la liaison, et donc un moment en flexion important qui use rapidement les pièces du renvoi d'angle.

On remarquera que l'augmentation ou la diminution des rapports d'engrenage peut être faite indépendamment de l'encombrement de l'accessoire 3 entrainé par l'ensemble d'entrainement 30a-30c, que ce soit en connectant leurs organes d'engrènement respectifs directement à l'arbre primaire 10 ou via un organe d'engrènement intermédiaire 33, notamment dans le cas des renvois d'angle à axes non concourants et parallèles 36, 38. En effet, il suffit de modifier la dimension (rayon et/ou dimensions des dents) des organes d'engrènement associés. L'installation des équipements de l'AGB 1 est donc fortement assouplie. Il est par ailleurs possible d'utiliser un même engrenage pour entrainer plusieurs accessoires, notamment dans le cas d'engrenages à axes parallèles 36, 38.

Ainsi, l'entraxe entre chaque ensemble d'entrainement 30a-30c et le renvoi d'angle primaire 20 peut être choisi indépendamment du rayon et du nombre de dents des différents organes d'engrènement, en les connectant directement ou indirectement (via des roues intermédiaires 33 notamment) l'arbre primaire 10. Par ailleurs, l'utilisation de renvois d'angle coniques ou avec axes non concourants (vis sans fin et roue) 32a, 32b, 34a, 34b, ou d'organes d'engrènement à axes parallèles 36, 38 permet d'adapter la position angulaire des accessoires 3 autour de l'arbre primaire 10 de l'AGB 1 en fonction de leur encombrement afin d'optimiser le volume d'installation possible des accessoire 3 dans l'AGB 1 dans la partie supérieure du carter 2 et/ou sur au moins un flanc du carter 2.

Les ensembles d'entrainement 30a-30c et le renvoi d'angle primaire 20 peuvent donc être positionnés sur l'arbre primaire 10 en fonction de l'encombrement des accessoires 3, ce qui permet de mieux répartir les accessoires 3 dans l'AGB 1, sans modifier leur vitesse d'entrainement, dans un espace s'étendant principalement au-dessus du carter 2 du moteur et sur au moins l'un de ses flancs latéraux. L'AGB 1 est donc particulièrement adaptée à son utilisation dans un turbopropulseur 8, dont la nacelle est de forme globalement allongée dans la direction verticale et présente un espace relativement important en partie supérieure du carter 2.

Par ailleurs, la mise en oeuvre des renvois d'angle primaire 20 et secondaires 30a-30c peut permettre de réduire l'encombrement de l'AGB 1 et de mieux maîtriser l'augmentation de sa masse en comparaison avec des AGB conventionnels tels que celui représenté sur la figure 1, puisqu'il n'est plus nécessaire d'ajouter des roues intermédiaires si l'on souhaite augmenter l'entraxe entre deux accessoires ou dans certains cas, si l'on souhaite ajouter un autre accessoire aux ensembles d'entrainement 30a-30c.

## Revendications

1. Turbomachine (8), comprenant :
- un carter de moteur (2),
- un arbre moteur (6), logé dans le carter de moteur (2), ledit arbre moteur (6) définissant un axe de rotation (X),
- un boîtier d'entraînement d'accessoires (1), disposé à l'extérieur du carter de moteur (2), le boîtier d'entraînement d'accessoires (1) étant relié à l'arbre moteur (6) par l'intermédiaire d'un arbre radial de transmission (21) entraîné par l'arbre moteur (6) formant un angle avec l'axe de rotation (X) de l'arbre moteur (6), et
- une pluralité d'arbres de transmission (35a-35c) destinés à entrainer mécaniquement des accessoires (3),
la turbomachine étant **caractérisée en ce que** le boîtier d'entraînement d'accessoires (1) comprend en outre :
- un arbre primaire (10), s'étendant sensiblement transversalement à l'axe de rotation (X) de l'arbre moteur (6) et entraîné par l'arbre radial de transmission (21) par l'intermédiaire d'un renvoi d'angle primaire (20), ledit renvoi d'angle primaire (20) comprenant un organe d'engrènement primaire (24, 28) monté sur l'arbre primaire (10), et
- une pluralité d'ensembles d'entrainement (30a-30c) mécanique des arbres de transmission (35a-35c), lesdits ensembles d'entrainement (30a-30c) étant entrainés par l'arbre primaire (10) et étant configurés de sorte que les accessoires associés (3) s'étendent en partie supérieure et sur au moins un des bords latéraux du carter de moteur (2).

2. Turbomachine (8) selon la revendication 1, dans laquelle au moins l'un des ensembles d'entrainement (30a-30c) comprend un organe d'engrènement secondaire (32a, 32b, 36) solidaire de l'arbre primaire (10) et un organe d'engrènement de sortie (34a, 34b, 38) solidaire de l'arbre de transmission (35a-35c) de l'accessoire (3) entrainé par l'ensemble d'entrainement (30a-30c).

3. Turbomachine (8) selon la revendication 2, dans laquelle l'organe d'engrènement secondaire comprend une roue conique (32a), et l'organe d'engrènement de sortie comprend un pignon conique (32a) de sorte qu'un axe de l'arbre primaire (10) et un axe de l'arbre de transmission (35a) sont concourants.

4. Turbomachine (8) selon l'une des revendications 1 à 3, dans laquelle le renvoi d'angle primaire (20) comprend un organe d'engrènement d'attaque (22, 26) solidaire de l'arbre radial de transmission (21).

5. Turbomachine (8) selon la revendication 4, dans laquelle les organes d'engrènement (22, 24) du renvoi d'angle primaire (20) sont à axes concourants (23, 25), l'organe d'engrènement d'attaque comprenant un pignon conique d'attaque (22), et l'organe d'engrènement primaire comprenant une couronne conique (24).

6. Turbomachine (8) selon l'une des revendications 2 ou 3, dans laquelle les organes d'engrènement (26, 28 ; 22, 24) du renvoi d'angle primaire (20) et/ou d'au moins l'un des ensembles d'entrainement (30b-30c) sont à axes non concourants (27, 29).

7. Turbomachine (8) selon la revendication 6, dans laquelle le renvoi d'angle primaire (20) comprend une roue (26) et une vis sans fin (28).

8. Turbomachine (8) selon l'une des revendications 6 ou 7, dans laquelle au moins l'un des ensembles d'entrainement (30b) comprend un renvoi d'angle (30b) comprenant deux organes d'engrènement (32b, 34b) comportant une roue (32b) et une vis sans fin (34b).

9. Turbomachine (8) selon l'une des revendications 6 à 8, dans laquelle le boîtier d'entraînement d'accessoires (1) comprend un carter de boîtier (4) et les organes d'engrènement de l'au moins un ensemble d'entrainement (30b-30c) sont fixés sur le carter de boîtier (4) par au moins deux liaisons (40) s'étendant de part et d'autre de chaque organe d'engrènement (32b, 34b, 36, 38).

10. Turbomachine (8) selon l'une des revendications 1 à 9, dans laquelle au moins l'un des ensembles d'entrainement (30c) comprend un engrenage à axes parallèles (36, 38) comprenant une roue secondaire (36) entrainée par l'arbre primaire (10) et une roue de sortie (38) solidaire de l'arbre de transmission (35c), de sorte que l'axe de la roue secondaire (36) et l'axe de la roue de sortie (38) sont parallèles.

11. Turbomachine (8) selon la revendication 10, dans laquelle au moins deux des ensembles d'entrainement (30c) sont entrainés en série par un même organe d'engrènement (36) fixé sur l'arbre primaire (10), ledit organe d'engrènement comprenant une roue secondaire (36) fixée sur l'arbre primaire.

12. Turbomachine (8) selon l'une des revendications 10 ou 11, dans laquelle au moins l'un des ensembles d'entrainement (30c) comprend une roue de sortie (38) entrainée via une roue intermédiaire (33) par une roue secondaire (36) fixée sur l'arbre primaire (10).

13. Aéronef, comprenant une nacelle et une turbomachine (8) selon l'une des revendications 1 à 12 logée dans la nacelle, dans lequel la nacelle est de forme globalement allongée selon une direction verticale et la turbomachine (2) est disposée dans une zone globalement inférieure de la nacelle tandis que le boîtier d'entraînement d'accessoires (1) s'étend dans une zone globalement supérieure de ladite nacelle.

14. Aéronef comprenant une turbomachine (8) selon la revendication 13, dans lequel le boîtier d'entraînement d'accessoires (1) comprend une pluralité d'accessoires (33) répartis dans la zone supérieure de la nacelle et sur au moins un des bords latéraux du carter de moteur (2).

15. Aéronef selon la revendication 14, dans lequel le boîtier d'entraînement d'accessoires (1) comprend un premier accessoire (3) disposé au niveau d'une première extrémité libre (12, 14) de l'arbre primaire (10) et agencé de manière à s'étendre vers le bas en étant disposé le long d'un premier bord latéral du carter de moteur (2).

## Patentansprüche

1. Turbotriebwerk (8), Folgendes umfassend:
- ein Motorgehäuse (2),
- eine Motorwelle (6), die im Motorgehäuse (2) untergebracht ist, wobei die besagte Motorwelle (6) eine Rotationsachse (X) definiert,
- ein Hilfsgerätegetriebe (1), das außen am Motorgehäuse (2) angeordnet ist, wobei das Hilfsgerätegetriebe (1) über eine radiale Antriebswelle (21) mit der Motorwelle (6) verbunden ist, die durch die Motorwelle (6) angetrieben wird, die mit der Rotationsachse (X) der Motorwelle (6) einen Winkel bildet, und
- eine Vielzahl von Antriebswellen (35a-35c), die dazu bestimmt sind, Hilfsgeräte (3) mechanisch anzutreiben,
wobei das Turbotriebwerk **dadurch gekennzeichnet ist, dass** das Hilfsgerätegetriebe (1) darüber hinaus Folgendes umfasst:
- eine Primärwelle (10), die sich im Wesentlichen querlaufend zur Rotationsachse (X) der Motorwelle (6) erstreckt, und durch die radiale Antriebswelle (21) über ein Primär-Winkelgetriebe (20) angetrieben wird, wobei das besagte Primär-Winkelgetriebe (20) ein Primär-Eingiffsorgan (24, 28) umfasst, das auf der Primärwelle (10) montiert ist, und
- eine Vielzahl von mechanischen Antriebseinheiten (30a-30c) der Antriebswellen (35a-35c), wobei die besagten Antriebseinheiten (30a-30c) durch die Primärwelle (10) angetrieben werden, und derart konfiguriert sind, dass sich die zugehörigen Hilfsgeräte (3) im oberen Abschnitt und über zumindest einen der seitlichen Ränder des Motorgehäuses (2) erstrecken.

2. Turbotriebwerk (8) nach Anspruch 1, wobei zumindest eine der Antriebseinheiten (30a-30c) ein Sekundär-Eingiffsorgan (32a, 32b, 36) umfasst, das fest mit der Primärwelle (10) verbunden ist, sowie ein Ausgangs-Eingiffsorgan (34a, 34b, 38), das fest mit der Antriebswelle (35a-35c) des Hilfsgeräts (3) verbunden ist, die durch die Antriebseinheit (30a-30c) angetrieben wird.

3. Turbotriebwerk (8) nach Anspruch 2, wobei das Sekundär-Eingiffsorgan ein Kegelrad (32a) umfasst, und das Augsangs-Eingiffsorgan ein Kegelritzel (32a) umfasst, sodass eine Achse der Primärwelle (10) und eine Achse der Antriebswelle (35a) konvergent sind.

4. Turbotriebwerk (8) nach einem der Ansprüche 1 bis 3, wobei das Primär-Winkelgetriebe (20) ein Antriebseingriffsorgan (22, 26) umfasst, das fest mit der radialen Antriebswelle (21) verbunden ist.

5. Turbotriebwerk (8) nach Anspruch 4, wobei die Eingriffsorgane (22, 24) des Primär-Winkelgetriebes (20) solche mit konvergenten Achsen (23, 25) sind, wobei das Antriebseingriffsorgan ein Antriebskegelritzel (22) umfasst, und das Primär-Eingiffsorgan einen Kegelradkranz(24) umfasst.

6. Turbotriebwerk (8) nach einem der Ansprüche 2 oder 3, wobei die Eingiffsorgane (26, 28; 22, 24) des Primär-Winkelgetriebes (20) und/ oder zumindest einer der Antriebseinheiten (30b-30c) solche mit nicht konvergenten Achsen (27, 29) sind.

7. Turbotriebwerk (8) nach Anspruch 6, wobei das Primär-Winkelgetriebe (20) ein Rad (26) und ein Schneckengetriebe (28) umfasst.

8. Turbotriebwerk (8) nach einem der Ansprüche 6 oder 7, wobei zumindest eine der Antriebseinheiten (30b) ein Winkelgetriebe (30b) umfasst, das zwei Eingiffsorgane (32b, 34b) umfasst, die ein Rad (32b) und ein Schneckengetriebe (34b) umfassen.

9. Turbotriebwerk (8) nach einem der Ansprüche 6 bis 8, wobei das Hilfsgerätegetriebe (1) ein Getriebegehäuse (4) umfasst und die Eingriffsorgane der zumindest einen Antriebseinheit (30b-30c) durch zumindest zwei Verbindungen (40) auf dem Getriebegehäuse (4) befestigt sind, die sich beiderseits eines jeden Eingriffsorgans (32b, 34b, 36, 38) erstrecken.

10. Turbotriebwerk (8) nach einem der Ansprüche 1 bis 9, wobei zumindest eine der Antriebseinheiten (30c) ein achsparalleles Getriebe (36, 38) umfasst, das ein Sekundärrad (36) umfasst, das durch die Primärwelle (10) angetrieben wird, und ein Ausgangsrad (38), das fest mit der Antriebswelle (35c) verbunden ist, sodass die Achse des Sekundärrads (36) und die Achse des Ausgangsrads (38) parallel zueinander liegen.

11. Turbotriebwerk (8) nach Anspruch 10, wobei zumindest zwei der Antriebseinheiten (30c) in Reihe durch ein selbes Eingriffsorgan (36) angetrieben werden, das auf der Primärwelle (10) befestigt ist, wobei das besagte Eingriffsorgan ein Sekundärrad (36) umfasst, das auf der Primärwelle befestigt ist.

12. Turbotriebwerk (8) nach einem der Ansprüche 10 oder 11, wobei zumindest eine der Antriebseinheiten (30c) ein Ausgangsrad (38) umfasst, das über ein Zwischenrad (33) durch ein Sekundärrad (36) angetrieben wird, das auf der Primärwelle (10) befestigt ist.

13. Luftfahrzeug, eine Gondel und ein Turbotriebwerk (8) nach einem der Ansprüche 1 bis 12 umfassend, das in der Gondel untergebracht ist, wobei die Gondel eine im Allgemeinen längliche Form in eine vertikale Richtung aufweist, und das Turbotriebwerk (2) in einer im Allgemeinen unteren Zone der Gondel angeordnet ist, während sich das Hilfsgerätegetriebe (1) in einer im Allgemeinen oberen Zone der besagten Gondel erstreckt.

14. Luftfahrzeug, ein Turbotriebwerk (8) nach Anspruch 13 umfassend, wobei das Hilfsgerätegetriebe (1) eine Vielzahl von Hilfsgeräten (33) umfasst, die in der oberen Zone der Gondel, und an zumindest einem der seitlichen Ränder des Motorgehäuses (2) verteilt sind.

15. Luftfahrzeug nach Anspruch 14, wobei das Hilfsgerätegetriebe (1) ein erstes Hilfsgerät (3) umfasst, das im Bereich eines ersten freien Endes (12, 14) der Primärwelle (10) angeordnet ist, und derart eingerichtet ist, um sich nach unten zu erstrecken, wobei es entlang eines ersten seitlichen Randes des Motorgehäuses (2) angeordnet ist.

## Claims

1. Turbine engine (8), comprising:
- an engine casing (2),
- an engine shaft (6) housed in the engine casing (2) said engine shaft (6) defining a rotation axis (X),
- an accessory gear box (1), disposed outside the engine casing (2), the accessory gear box (1) being connected to the engine shaft (6) by means of a radial transmission shaft (21) driven by the engine shaft (6), forming an angle with the rotation axis (X) of the engine shaft (6), and
- a plurality of transmission shafts (35a-35c) intended to drive accessories (3) mechanically,
the turbine engine being **characterised in that** the accessory gear box (1) further comprises:
- a primary shaft (10), extending substantially transversely to the rotation axis (X) of the engine shaft (6) and driven by the radial transmission shaft (21) by means of a primary angle transmission (20), said primary angle transmission (20) comprising a primary meshing member (24, 28) mounted on the primary shaft (10), and
- a plurality of assemblies (30a-30c) for mechanical driving of the transmission shafts (35a-35c), said driving assemblies (30a-30c) being driven by the primary shaft (10) and being configured so that the associated accessories (3) lie at the top part and on at least one of the lateral edges of the engine casing (2).

2. Turbine engine (8) according to claim 1, in which at least one of the driving assemblies (30a-30c) comprises a secondary meshing member (32a, 32b, 36) secured to the primary shaft (10) and an output meshing member (34a, 34b, 38) secured to the transmission shaft (35a-35c) of the accessory (3) driven by the driving assembly (30a-30c).

3. Turbine engine (8) according to claim 2, in which the secondary meshing member comprises a conical wheel (32a) and the output meshing member comprises a conical gear (32a) so that an axis of the primary shaft (10) and an axis of the transmission shaft (35a) are concurrent.

4. Turbine engine (8) according to one of claims 1 to 3, in which the primary angle transmission (20) comprises a leading meshing member (22, 26) secured to the radial transmission shaft (21).

5. Turbine engine (8) according to claim 4, in which the meshing members (22, 24) of the primary angle transmission (20) have concurrent axes (23, 25), the leading meshing member comprising a leading conical gear (22) and the primary meshing member comprising a conical ring (24).

6. Turbine engine (8) according to one of claims 2 or 3, in which the meshing members (26, 28; 22, 24) of the primary angle transmission (20) and/or of at least one of the driving assemblies (30b, 30c) have non-concurrent axes (27, 29).

7. Turbine engine (8) according to claim 6, in which the primary angle transmission (20) comprises a wheel (26) and a worm (28).

8. Turbine engine (8) according to one of claims 6 or 7, in which at least one of the driving assemblies (30b) comprises an angle transmission (30b) comprising two meshing members (32b, 34b) comprising a wheel (32b) and a worm (34b).

9. Turbine engine (8) according to one of claims 6 to 8, in which the accessory gear box (1) comprises a box casing (4) and the meshing members of at least one driving assembly (30b-30c) are fixed to the box casing (4) by at least two connections (40) extending on either side of each meshing member (32b, 34b, 36, 38).

10. Turbine engine (8) according to one of claims 1 to 9, in which at least one of the driving assemblies (30c) comprises gearing with parallel axes (36, 38) comprising a secondary wheel (36) driven by the primary shaft (10) and an output wheel (38) secured to the transmission shaft (35c), so that the axis of the secondary wheel (36) and the axis of the output wheel (38) are parallel.

11. Turbine engine (8) according to claim 10, in which at least two of the driving assemblies (30c) are driven in series by the same meshing member (36) fixed to the primary shaft (10), said meshing member comprising a secondary wheel (36) fixed to the primary shaft.

12. Turbine engine (8) according to one of claims 10 or 11, in which at least one of the driving assemblies (30c) comprises an output wheel (38) driven via an intermediate wheel (33) by a secondary wheel (36) fixed to the primary shaft (10).

13. Aircraft, comprising a nacelle and a turbine engine (8) according to one of claims 1 to 12 housed in the nacelle, in which the nacelle has an elongate form overall in a vertical direction and the turbine engine (2) is disposed in an overall lower zone of the nacelle while the accessory gear box (1) lies in an overall upper zone of said nacelle.

14. Aircraft comprising a turbine engine (8) according to claim 13, in which the accessory gear box (1) comprises a plurality of accessories (33) distributed in the upper zone of the nacelle and on at least one of the lateral edges of the engine casing (2).

15. Aircraft according to claim 14, in which the accessory gear box (1) comprises a first accessory (3) disposed at a first free end (12, 14) of the primary shaft (10) and arranged so as to extend downwards while being disposed along a first lateral edge of the engine casing (2).
